# FASCICULE DE BREVET EUROPEEN

(11) **EP 0 766 924 B1**
(45) Date de publication et mention de la délivrance du brevet: **14.11.2001**
(21) Numéro de dépôt: 95810607.2
(22) Date de dépôt: 28.09.1995
(51) Int. Cl.: A23L 1/217, A23L 1/03, A23L 1/164, A23P 1/08

(54) **Chips et frites allégées**
Kartoffelchips und leichte Pommes frites
Potato chips and light french fries

(43) Date de publication de la demande: 09.04.1997
(73) Titulaire: SOCIETE DES PRODUITS NESTLE S.A., 1800 Vevey (CH)
(72) Inventeur: Badertscher, Ernest, 1350 Orbe (CH)
(74) Mandataire: Wavre, Claude-Alain

(56) Documents cités:
- FR-A- 2 197 533
- GB-A- 2 254 994
- US-A- 3 830 941
- US-A- 5 242 699

## Description

La présente invention a pour objet un procédé de préparation de chips et de frites allégées.

Traditionnellement, pour la préparation des frites, on découpe en lamelles des pommes de terre préalablement épluchées puis on les plonge dans de l'huile de friture, de manière à les faire brunir. On obtient ainsi des frites moelleuses à l'intérieur et croustillantes à l'extérieur, mais dont la teneur en matières grasses est relativement élevée.

Pour la préparation de frites prêtes à cuire au four, il est connu depuis longtemps de procéder à une étape d'enrobage avant une étape de préfriture, de manière à diminuer la quantité d'huile pompée par les lamelles de pommes de terre au cours de cette seconde étape. Les frites ainsi obtenues présentent tout de même une teneur en matières grasses encore relativement élevée, de l'ordre de 10 à 16%, par exemple.

US 5059435 décrit notamment un procédé de préparation de frites, dans lequel on épluche et l'on découpe en morceaux les pommes de terre, on les préchauffe à 49-60° C pendant 20-60 min, on les blanchit dans de l'eau à 71-87,8° C pendant 5-7 min ou à la vapeur à 99-102° C pendant 1-3 min, on les plonge dans une solution contenant notamment du sel et du pyrophosphate acide de sodium, on les sèche à l'air à 93-110° C, on les enrobe avec un mélange contenant notamment de l'amidon de pommes de terre modifié, de l'amidon de maïs modifié, de la farine de riz, du petit lait et de l'eau, on les préfrit dans de l'huile à 186° C pendant 30-90 s puis on les refroidit, on les conditionne et on les congèle à - 18° C. On obtient ainsi des frites dont la teneur en matières grasses est de l'ordre de 13%. De manière à finaliser leur cuisson, le consommateur peut les cuire directement au four ou les plonger dans de l'huile de friture.

La présente invention a pour but de proposer un procédé de préparation de chips et de frites allégées économique, simple et rapide qui permette la préparation de chips et de frites à la texture et au goût traditionnels tout en étant pauvres en matières grasses.

A cet effet, dans le procédé de préparation de chips et de frites allégées selon la présente invention:
- on lave puis l'on découpe en lamelles des pommes de terre préalablement épluchées,
- on traite les lamelles à la vapeur surchauffée,
- puis on les enrobe avec 7-15% d'une émulsion comprenant une matière amylacée.

On a constaté avec surprise qu'un tel procédé permet effectivement d'obtenir des chips et des frites de couleur dorée et présentant le goût et la texture caractéristiques des produits traditionnels tout en ayant l'avantage d'avoir une teneur en matières grasses relativement faible.

Pour la mise en oeuvre du procédé de préparation de chips et de frites allégées selon la présente invention, on épluche donc, on lave et l'on découpe des pommes de terre en lamelles. Selon que l'on souhaite préparer des chips ou des frites allégées, on peut faire varier l'épaisseur des lamelles de 1 à 10 mm, par exemple.
De préférence, pour la préparation de chips allégées, on découpe des pommes de terre en lamelles de 1 à 4 mm d'épaisseur. De préférence, pour la préparation de frites allégées, on découpe des pommes de terre en lamelles de 5 à 10 mm d'épaisseur.

De préférence, on traite les lamelles à la vapeur surchauffée à 190-270° C à pression atmosphérique pendant 1-5 min. Cette étape peut être réalisée dans un cuiseur à bande ou sur des plateaux, par exemple. Au cours de cette étape, lors d'une première phase de blanchiment et de condensation, la vapeur surchauffée condense à la surface des lamelles. Elle réchauffe en surface jusqu'à un palier de température d'environ 100° C les lamelles qui étaient à température ambiante. Cette température est maintenue tant que l'eau présente en surface des lamelles n'est pas totalement évaporée. Puis, lors d'une seconde phase de séchage, les lamelles gonflent et leur température en surface augmente. Enfin, lors d'une troisième phase, les lamelles subissent un séchage en profondeur. Lors de cette troisième phase, si les lamelles ont une épaisseur de 1 à 4 mm, le séchage en profondeur est total. Par contre, si les lamelles ont une épaisseur de 5 à 10 mm, le séchage en profondeur n'est que partiel.

Puis on enrobe donc les lamelles avec 7-15% d'une émulsion comprenant une matière amylacée. On peut notamment les enrober dans une drageuse ou dans un cylindre d'enrobage avec une émulsion contenant, en % en poids, 32-68% de matière amylacée, 30-60% d'huile et 2-8% de sel, par exemple.
Ladite huile peut être toute huile comestible supportant une température élevée telle que l'huile d'arachide ou l'huile d'olive, par exemple.
Ladite matière amylacée peut être une solution, une dispersion ou une bouillie aqueuse d'amidon, de farine de féculent ou de pulpe de tubercules de pommes de terre, par exemple. De préférence, cette matière amylacée est composée de chutes de pommes de terre préalablement hydrolysées.
Dans ce dernier cas, pour la préparation de l'émulsion, on peut hydrolyser avec 0,01-0,2% d'alpha-amylase, notamment celle commercialisée sous la dénomination Dexlo P par Gist-Brocades ou 0,2-2% d'amyloglucosidase, notamment celle commercialisée sous la dénomination AMG 300 L par Novo, à 65-90° C pendant 10-60 min les chutes de pommes de terre que l'on a recueillies lors du découpage des pommes de terre en lamelles, par exemple.

On peut saupoudrer les lamelles avec un mélange aromatique pendant ou après l'étape d'enrobage, par exemple. On peut les saupoudrer notamment avec un mélange aromatique contenant des herbes, des épices, des flocons de légumes et/ou des copeaux de fromage.

Dans un premier mode de réalisation préféré du procédé, on prépare des chips. Pour ce faire, après l'étape d'enrobage, on toaste les lamelles à 155-180° C pendant 1-5 min dans un four à air ou à la vapeur surchauffée puis on les refroidit à 15-25° C avant de les conditionner, par exemple. On obtient ainsi des chips à la texture croustillante.

Dans un second mode de réalisation préféré du procédé, on prépare des frites. Pour ce faire, après l'étape d'enrobage, on refroidit les lamelles à 15-25° C puis on les conditionne et on les congèle entre -25° C et - 17° C, par exemple. On obtient ainsi des frites à la surface croustillante et au coeur moelleux.

La présente invention a également pour objet les chips et les frites allégées obtenues par le présent procédé et dont la teneur en matières grasses est de 5-7%

Le procédé de préparation de chips et de frites allégées selon la présente invention est décrit plus en détails dans les exemples ci-après. Dans ces exemples, les pourcentages et parties sont données en poids, sauf indication contraire.

### Exemple 1

On prépare des frites allégées.

Pour ce faire, on épluche des pommes de terre que l'on lave et que l'on découpe en lamelles de 5 mm d'épaisseur.

On traite les lamelles à la vapeur surchauffée à 200° C à pression atmosphérique pendant 4 min. Pour ce faire, on réalise cette étape dans un cuiseur à bande.

Parallèlement, on hydrolyse avec 0,1% d'alpha-amylase Dexlo P à 75° C pendant 20 min les chutes de pommes de terre que l'on a recueillies lors du découpage des pommes de terre en lamelles.

On prépare alors une émulsion contenant 45 % de chutes de pommes de terre hydrolysées, 50% d'huile d'arachide et 5% de sel.

Puis on enrobe les lamelles de pommes de terre traitées à la vapeur surchauffée à pression atmoshérique avec 9% de l'émulsion ainsi préparée. Pour ce faire, on pulvérise l'émulsion sur les lamelles dans un cylindre d'enrobage à l'aide d'une buse à 2 flux.

On refroidit les lamelles à 20° C, avant de les conditionner et de les congeler à -18° C.

On obtient ainsi des frites allégées prêtes à cuire au four par le consommateur, de manière à finaliser leur cuisson. Ces frites, cuites au four à 170°C pendant 5 min, sont moelleuses à l'intérieur et croustillantes à l'extérieur et présentent une teneur en matières grasses de 5%.

### Exemple 2

On prépare des chips allégées.

Pour ce faire, on procède de la manière décrite à l'exemple 1 jusqu'à l'étape d'enrobage.

Puis on les toaste à 170° C pendant 3 min dans un four à vapeur surchauffée.

Après cette étape, on les refroidit à 20° C et on les conditionne dans des sachets hermétiquement fermés.

On obtient ainsi des chips allégées dorées, à la texture croustillante et présentant une teneur en matières grasses de 5%.

### Exemple 3

On prépare des chips allégées arômatisées.

Pour ce faire, on procède de la manière décrite à l'exemple 1 jusqu'à l'étape d'enrobage.

Puis on saupoudre les lamelles encore humides d'un mélange aromatique contenant 50% de flocons de tomate, 30% de paprika et 20% de persil.

On les toaste à 170° C pendant 3 min dans un four à vapeur surchauffée.

Après cette étape, on les refroidit à 20° C et on les conditionne dans des sachets hermétiquement fermés.

On obtient ainsi des chips allégées, arômatisées aux herbes, dorées, à la texture croustillante et présentant une teneur en matières grasses de 5%.

## Revendications

1. Procédé de préparation de chips et de frites allégées, dans lequel:
- on lave puis l'on découpe en lamelles des pommes de terre préalablement épluchées,
- on traite les lamelles à la vapeur surchauffée,
- puis on les enrobe avec 7-15% d'une émulsion comprenant une matière amylacée.

2. Procédé selon la revendication 1, dans lequel on traite les lamelles à la vapeur surchauffée à 190-270° C à pression atmosphérique pendant 1-5 min.

3. Procédé selon la revendication 1, dans lequel on enrobe les lamelles avec une émulsion comprenant 38-62% de chutes de pommes de terre préalablement hydrolysées, 30-60% d'huile d'arachide et 2-8% de sel.

4. Procédé selon la revendication 3, dans lequel on hydrolyse les chutes de pommes de terre avec 0,01-0,2% d'alpha-amylase ou 0,2-2% d'amyloglucosidase à 65-90° C pendant 10-60 min.

5. Procédé selon la revendication 1, dans lequel on saupoudre les lamelles avec un mélange aromatique pendant ou après l'étape d'enrobage.

6. Procédé selon la revendication 1, dans lequel, après l'étape d'enrobage, on toaste les lamelles à 155-180° C pendant 1-5 min puis on les refroidit 15-25° C avant de les conditionner.

7. Procédé selon la revendication 1, dans lequel, après l'étape d'enrobage, on refroidit les lamelles à 15-25° C puis on les conditionne et on les congèle entre -25°Cet- 17° C.

## Patentansprüche

1. Verfahren zur Herstellung von fettreduzierten Kartoffelchips und Pommes frites, bei dem man
- zuvor geschälte Kartoffel in Scheiben schneidet,
- die Scheiben mit überhitztem Dampf behandelt
- und sie dann mit 7-15% einer Emulsion umhüllt, die ein stärkehaltiges Material enthält.

2. Verfahren nach Anspruch 1, bei dem man die Scheiben 1-5 min bei atmosphärischem Druck mit überhitztem Dampf mit 190-270°C behandelt.

3. Verfahren nach Anspruch 1, bei dem man die Scheiben mit einer Emulsion umhüllt, die 38-62% zuvor hydrolysierte Kartoffelabfälle, 30-60% Erdnussöl und 2-8% Salz enthält.

4. Verfahren nach Anspruch 3, bei dem man die Kartoffelabfälle 10-60 min bei 65-90°C mit 0,01-0,2% α-Amylase oder 0,2-2% Amyloglucosidase hydrolysiert.

5. Verfahren nach Anspruch 1, bei dem man die Scheiben während oder nach dem Umhüllungsschritt mit einer aromatischen Mischung bestreut.

6. Verfahren nach Anspruch 1, bei dem man die Scheiben nach dem Umhüllungsschritt 1-5 min bei 155-180°C röstet und sie dann auf 15-25°C kühlt, bevor sie verpackt werden.

7. Verfahren nach Anspruch 1, bei dem man die Scheiben nach dem Umhüllungsschritt auf 15-25°C kühlt und sie dann verpackt und auf -25°C bis -17°C tiefkühlt.

## Claims

1. Process for preparing low-calorie crisps and chipped potatoes, wherein:
- previously peeled potatoes are washed and then cut up into thin slices,
- the thin slices are treated with superheated steam,
- they are then coated with 7-15 % of an emulsion containing a starchy material.

2. Process according to claim 1 wherein the thin slices are treated with superheated steam at 190-270°C at atmospheric pressure for 1-5 min.

3. Process according to claim 1, wherein the thin slices are coated with an emulsion containing 38-62% of previously hydrolysed potato off-cuts, 30-60 % of peanut oil and 2-8 % of salt.

4. Process according to claim 3, wherein the potato off-cuts are hydrolysed with 0.01-0.2 % of alpha amylase or 0.2-2 % of amyloglucosidase at 65-90°C for 10-60 min.

5. Process according to claim 1, wherein the thin slices are sprinkled with an aromatic mixture during or after the coating step.

6. Process according to claim 1, wherein, after the coating step, the thin slices are toasted at 155-180°C for 1-5 min and then cooled to 15-25°C before packaging them.

7. Process according to claim 1, wherein, after the coating step, the thin slices are cooled to 15-25°C and then packaged and frozen between -25°C and -17°C.
